# EUROPEAN PATENT SPECIFICATION

(11) **EP 4 257 330 B1**
(45) Date of publication and mention of the grant of the patent: **24.12.2025**
(21) Application number: 21900593.1
(22) Date of filing: 30.11.2021
(51) Int. Cl.: B29C 45/16, B29C 45/37, B29C 49/06, B29C 49/22, B29C 33/42, B29C 49/02, B29C 49/00, B29C 49/08, B29C 49/64, B29K 25/00, B29K 23/00, B29K 33/00, B29K 81/00, B29K 67/00, B29L 9/00, B29L 31/00

(54) **METHOD AND APPARATUS FOR MANUFACTURING RESIN CONTAINER**
VERFAHREN UND VORRICHTUNG ZUR HERSTELLUNG EINES HARZBEHÄLTERS
PROCÉDÉ ET APPAREIL POUR LA FABRICATION D'UN RÉCIPIENT EN RÉSINE

(30) Priority: 01.12.2020 JP 2020199827
(43) Date of publication of application: 11.10.2023
(73) Proprietor: Nissei ASB Machine Co., Ltd., Komoro-shi, Nagano 384-8585 (JP)
(72) Inventor: OIKE, Toshiteru, Komoro-shi Nagano 384-8585 (JP); TSUCHIYA, Yoichi, Komoro-shi Nagano 384-8585 (JP); OZAKI, Yasuo, Komoro-shi Nagano 384-8585 (JP)
(74) Representative: Mewburn Ellis LLP
(86) International application number: PCT/JP2021/043880
(87) International publication number: WO 2022/118840

(56) References cited:
- EP-A1- 3 733 538
- WO-A1-2010/069042
- JP-A- 2007 326 586
- JP-A- H10 338 220
- US-A1- 2013 004 692
- US-B1- 6 467 653

## Description

### Technical Field

The present invention relates to a method for manufacturing a resin container and a resin container manufacturing apparatus.

### Background Art

Conventionally, for example, a resin container that shrinks in proportion to discharge of contents, such as an inner layer of a delamination container having a two-layer structure or a bag-in box (BIB) container inserted into an outer box such as a cardboard box, has been manufactured by blow molding.

This type of container is known to include a container having a structure in which the strength of a container body portion varies regularly in a circumferential direction to induce appropriate and regular shrinkage deformation in proportion to discharge of contents. The structure described above can be produced, for example, by performing blow molding on a preform having a thickness distribution and a temperature distribution which regularly change in a circumferential direction as in Patent Literature 1 and 2 or by performing blow molding by using a mold having shrinkage inducing pits and projections in a body portion as in Patent Literature 3.

WO2010/069042A1 discloses a preform and a mold stack for producing the preform.

US2013/004692A1 discloses a preform and container comprising reinforcing elements.

US6467653B1 discloses a pump container using a laminated bottle with a peelable inner layer.

EP3733538A1 discloses a synthetic resin container, a preform, and a method for producing a synthetic resin container.

JPH10338220A discloses a plastic bottle.

JP2007326586A discloses a plastic bottle.

### Citation List

### Patent Literature

Patent Literature 1: JP 2019-142186 A
Patent Literature 2: JP 3255485 B
Patent Literature 3: JP 4588200 B

### Summary of Invention

### Technical Problem

When a structure for inducing shrinkage is formed in a container by the above-described method, a shrinkage inducing structure part is not inconspicuous. For example, when the entire container is transparent, the aesthetic appearance of the container is affected if the shrinkage inducing structure part is conspicuous.

Therefore, the present invention is made in view of such problems, and an object of the present invention is to provide a method for manufacturing a resin container by which a shrinkage inducing structure part can be formed not to be easily noticeable in the container.

### Solution to Problem

A method for manufacturing a resin container as an aspect of the present invention is as specified in claim 1.

The method may optionally be as specified in claim 2 or claim 3.

A resin delamination container manufacturing apparatus according to a further aspect of the present invention is as specified in claim 4.

### Advantageous Effects of Invention

According to an aspect of the present invention, a shrinkage inducing structure part can be formed to be inconspicuous in the container.

### Brief Description of Drawings

Fig. 1(a) is a longitudinal sectional view of a preform of this embodiment, and Fig. 1(b) is a bottom view of the preform.
Fig. 2(a) is a front view of a delamination container of the embodiment, and Fig. 2(b) is a bottom view of the delamination container of the embodiment.
Fig. 3 is a longitudinal sectional view of the delamination container of the embodiment.
Fig. 4 is a cross-sectional view of the vicinity of a bottom surface, illustrating an example of the delamination container in a state of having a shrunk inner layer.
Fig. 5 is a diagram schematically illustrating a configuration of a blow molding apparatus of the embodiment.
Fig. 6 is a view illustrating a preform manufacturing step of the embodiment.
Fig. 7 is a view illustrating the vicinity of a bottom portion of a first layer in a first injection molding unit.
Fig. 8 is a view illustrating the vicinity of a bottom of a preform in a second injection molding unit.
Fig. 9 is a flowchart illustrating steps of a method for manufacturing a delamination container.
Fig. 10 is a view illustrating the vicinity of a bottom portion of an injection molding unit in a modification example of the embodiment.

### Description of Embodiments

Hereinafter, embodiments of the present invention will be described with reference to the drawings. In the embodiments, a delamination container will be described as an example of a resin container (hereinafter, simply referred to as a container) that can shrink in proportion to discharge of contents.

In the embodiment, for easy understanding, the description of structures and elements other than main parts of the present invention will be simplified or omitted. In addition, in the drawings, the same reference numerals are assigned to the same elements. Further, shapes, dimensions, and the like of the respective elements illustrated in the drawings are schematically set and may not represent actual shapes, dimensions, and the like.

### <Configuration Example of Preform>

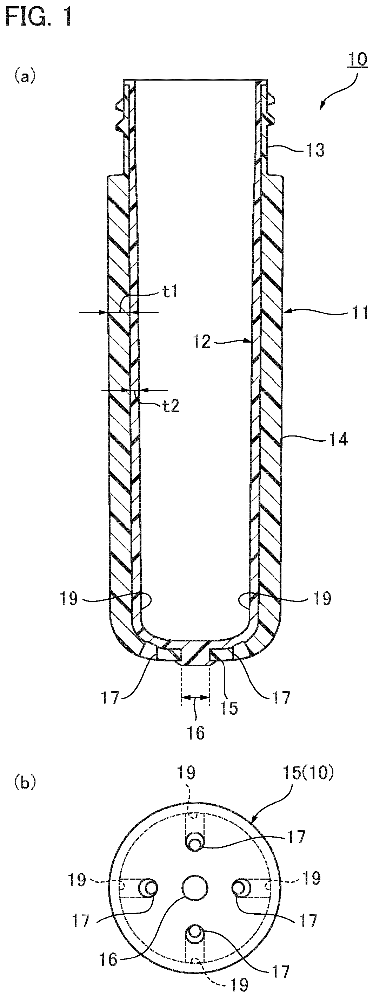

First, a configuration example of a preform for a delamination container according to the embodiment will be described with reference to Fig. 1. Fig. 1(a) is a longitudinal sectional view of a preform 10 of the embodiment, and Fig. 1(b) is a bottom view of the preform 10.

The entire shape of the preform 10 is a bottomed cylindrical shape of which one end side is open and the other end side is closed. The preform 10 includes a body portion 14 formed in a cylindrical shape, a bottom portion 15 that closes the other end side of the body portion 14, and a neck portion 13 formed in an opening on the one end side of the body portion 14.

The preform 10 has a two-layer structure in which a second layer (inner layer) 12 is laminated inside a first layer (outer layer) 11. The first layer 11 and the second layer 12 are formed of respective different thermoplastic resin materials through two-phases injection molding as will be described below. As an example, the first layer 11 is made of a synthetic resin having superior properties of moldability and transparency. On the other hand, the second layer 12 is made of a synthetic resin having properties suitable for stably storing contents of the container and suppressing deterioration (oxidation) (for example, moisture barrier property, gas barrier property, heat resistance, or chemical resistance). In addition, the resin material of the first layer 11 is selected to have a melting point higher than that of the resin material of the second layer 12.

Further, the resin material of the first layer 11 may not satisfy the above-described relationship as long as the resin material has a melting point higher than that of the resin material of the second layer 12. For example, a resin material having any one of superior moisture barrier properties, gas barrier properties, heat resistance, or chemical resistance to that of the resin material of second layer 12 may be applied as the resin material of first layer 11.

Hereinafter, the resin material of the first layer 11 is also referred to as a first resin material, and the resin material of the second layer 12 is also referred to as a second resin material.

A combination of the first resin material and the second resin material can be appropriately selected in association with the specification of the delamination container. Examples of specific types of material include polyethylene terephthalate (PET), polyethylene naphthalate (PEN), polycyclohexanedimethylene terephthalate (PCTA), Tritan (Tritan (registered trademark): copolyester manufactured by Eastman Chemical Co., Ltd.), polypropylene (PP), polyethylene (PE), polycarbonate (PC), polyethersulfone (PES), polyphenylsulfone (PPSU), polystyrene (PS), a cyclic olefin polymer (COP/COC), polymethyl methacrylate: acrylic (PMMA), polylactic acid (PLA), and the like.

As an example, the first resin material is polyethylene terephthalate (PET), and the second resin material is polypropylene (PP). The melting point of PP is about 160 to 170°C, and the melting point of PET is higher than the melting point of PP and is about 245 to 260°C.

In addition, in the body portion 14 of the preform 10, a ratio (t1/t2) of a thickness t1 of the first layer 11 to a thickness t2 of the second layer 12 is preferably 1.5 or higher. The thickness ratio is preferably 3.0 or lower from the viewpoint of ensuring the transparency of the delamination container to be molded.

In addition, in the bottom portion 15 of the preform 10, an opening portion 16 is formed to penetrate the first layer 11 at a center of the bottom portion of the first layer 11. The opening portion 16 of the first layer 11 is closed from the inside by the second layer 12.

In addition, in the bottom portion 15 of the preform 10, a plurality of recess portions 17 for forming air introducing holes in the delamination container are formed to be arranged radially around the center of the bottom portion. The recess portions 17 have a substantially circular shape and are formed at intervals in a radial direction from the opening portion 16. For example, two or more, preferably four, recess portions 17 are formed to be rotationally symmetric around the center of the bottom portion 15 of the preform 10. In the embodiment, an example in which four recess portions 17 are formed is described.

A depth of the recess portion 17 in a thickness direction of the preform 10 is set to a dimension which allows at least the recess portion 17 to penetrate the first layer 11 such that a surface of the second layer 12 is exposed in the recess portion 17. Further, the recess portion 17 formed in the preform 10 having the two-layer structure is an example of a second recess.

In addition, in the second layer 12, a plurality of strip-shaped first regions 19 extending radially outward from the recess portions 17 as a starting point are formed. Two or more, preferably four, first regions 19 are formed in a circumferential direction to be rotationally symmetric around the center of the bottom portion 15 of the preform 10. The first region 19 is different from the other regions (also referred to as second regions) in the circumferential direction of the preform 10 in physical properties such as a level of density of the resin and/or an orientation of the resin and has a characteristic of being hardly deformed in the circumferential direction and the inward radial direction. For example, the density of the resin is higher in the first region 19 than in the second region. In addition, in the first region 19, the orientation of the resin has directivity in a longitudinal direction from the bottom portion 15 toward the neck portion 13, whereas in the second region, the orientation of the resin varies in a direction intersecting the longitudinal direction as compared with the first region 19.

Further, the first region 19 in the second layer 12 is difficult to visually distinguish from the second region in terms of external appearance but can be identified by a method such as strain measurement by a photoelastic method, for example.

### <Configuration Example of Delamination Container>

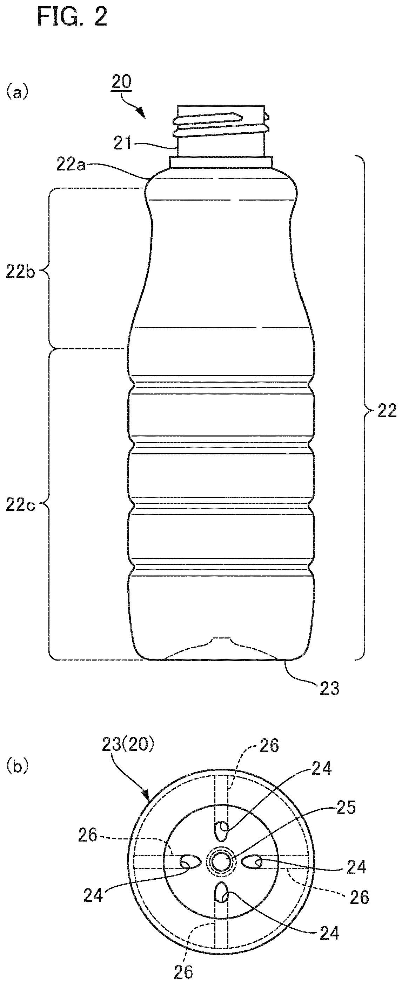

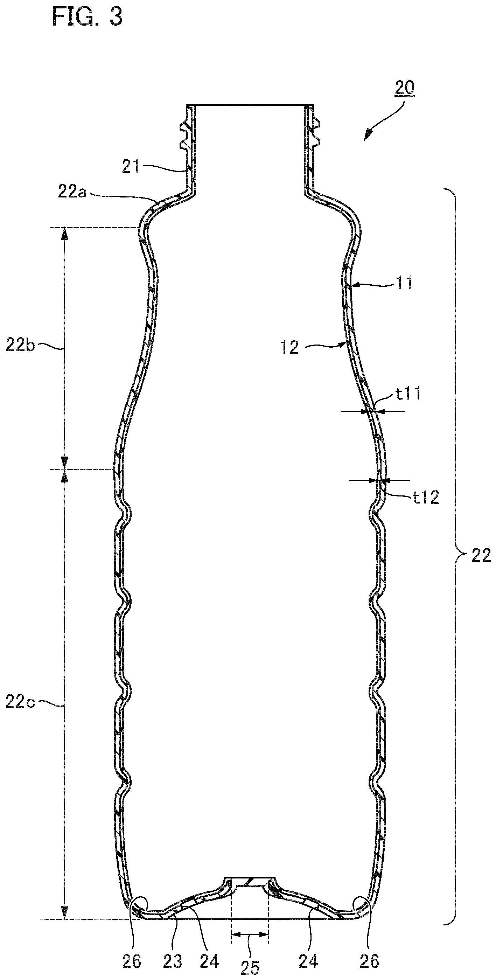

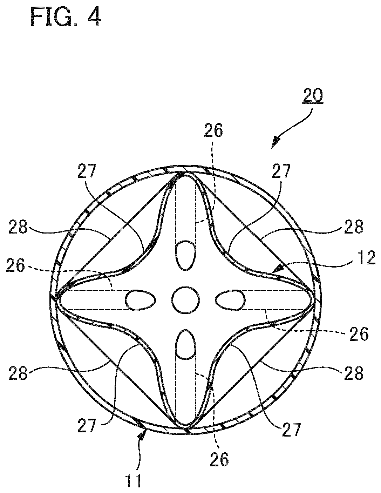

Next, a configuration example of a resin delamination container 20 according to the embodiment will be described with reference to Figs. 2, 3, and 4. Figs. 2(a) and 2(b) are a front view and a bottom view of the delamination container 20 of the embodiment. Fig. 3 is a longitudinal sectional view of the delamination container 20 of the embodiment. In addition, Fig. 4 is a cross-sectional view of the vicinity of a bottom surface, illustrating an example of the delamination container 20 in a state of having a shrunk inner layer.

The delamination container 20 is a bottle shaped resin container obtained through stretch blow molding on the preform 10 and contains, for example, a seasoning liquid such as soy sauce. Further, the delamination container 20 may be used to accommodate other contents such as a cosmetic liquid.

As illustrated in Fig. 3, similarly to the preform 10, the delamination container 20 has a two-layer structure in which the bag-shaped second layer 12 is laminated inside the first layer 11. In the body portion 22 of the delamination container 20, a ratio (t11/t12) of a thickness t11 of the first layer 11 to a thickness t12 of the second layer 12 is substantially similar to the ratio (t1/t2) of the thicknesses in the body portion 14 of the preform 10.

As illustrated in Fig. 2(a), the delamination container 20 includes a neck portion 21 having an opening at an upper end, a cylindrical body portion 22 continuous from the neck portion 21, and a bottom portion 23 continuous from the body portion 22. Further, the body portion 22 may have a shape including a shoulder 22a having one end connected to the neck portion 21 and expanding in the radial direction toward the other end, a main body portion 22c having the other end connected to the bottom portion 23, and a constricted portion 22b connected to the other end of the shoulder 22a and one end of the main body portion 22c and connecting the shoulder 22a and a main body portion 22c. Further, a cross section of the delamination container 20 has a substantially circular shape at any position in an axial direction.

In the manufacture of the delamination container 20, the body portion 14 and the bottom portion 15 of the preform 10 are expanded by stretch blow to be shaped into the body portion 22 and the bottom portion 23 of the delamination container 20. In addition, during the stretch blow, the recess portions 17 of the preform 10 are stretched, so that four air introducing holes 24 penetrating the first layer 11 are formed in the bottom portion 23 of the delamination container 20 as illustrated in Fig. 2(b).

In addition, in the bottom portion 23 of the delamination container 20, an opening portion 25 penetrating the first layer 11 is formed at the center of the bottom portion of the first layer 11, similarly to the preform 10. The opening portion 25 is filled with the material of the second layer 12 such that the opening portion 25 is closed, and the second layer 12 is exposed on an outer side of the first layer 11 in the vicinity of the opening portion 25 of the bottom portion 23 of the delamination container 20. When the second layer 12 is exposed on the outer side of the first layer 11 at the opening portion 25 of the delamination container 20, the second layer 12 is partially fixed to the first layer 11, and positional displacement of the second layer 12 with respect to the first layer 11 is suppressed.

Moreover, a strip-shaped high-strength portion 26 formed by stretching the first region 19 of the preform 10 is formed in the second layer 12 of the delamination container 20. The four high-strength portions 26 extend radially outward from the position of the air introducing hole 24 and are formed in the circumferential direction to be rotationally symmetric around the opening portion 25 of the bottom portion 23.

Similarly to the case of the preform 10, the high-strength portion 26 of the delamination container 20 is different in physical properties such as a high level of density of the resin and/or an orientation of the resin, when compared to other regions (also referred to as easily-deformable portions 27) in the circumferential direction of the second layer 12 and has a characteristic of being hardly deformed in the circumferential direction. Further, although it is difficult to visually distinguish the high-strength portion 26 from the easily-deformable portion 27 in terms of external appearance, the high-strength portion can be identified by a method such as strain measurement by a photoelastic method, for example.

In the delamination container 20, a space inside the second layer 12 is filled with the contents. In the delamination container 20, when the contents are discharged from the second layer 12, the air gradually flows into a gap between the first layer 11 and the second layer 12 from the air introducing hole 24, and the first layer 11 and the second layer 12 are delaminated from each other. Consequently, a volume occupied by the contents in the container can be replaced with air without bringing the contents of the second layer 12 into contact with air, and the contents filled in the second layer 12 can be discharged to the outside of the container.

In the delamination container 20, as the contents filling the second layer 12 are discharged, the second layer 12 shrinks inward. Since the high-strength portion 26 of the second layer 12 is less likely to be deformed in the circumferential direction than the easily-deformable portion 27 is, as illustrated in Fig. 4, when the second layer 12 shrinks, the easily-deformable portion 27 shrinks inward earlier than the high-strength portion 26. Consequently, the easily-deformable portion 27 is folded to have close contact portions thereof along the high-strength portion 26 extending in the radial direction, and the high-strength portion 26 guides the second layer 12 to be appropriately and regularly shrunk and deformed.

In addition, in the shrinkage in proportion to the drainage from the container, the second layer 12 is deformed first from the easily-deformable portion 27 on an upper side close to the neck portion, and the bottom portion side of the second layer 12 is likely to be in a state of being attached to the bottom portion of the first layer 11 due to the load of the contents. Then, when the second layer 12 shrinks, as illustrated in Fig. 4, the bottom portion of the second layer 12 is folded at a position of a ridge line 28 connecting corners, each corner being an end portion of the strip-shaped high-strength portion 26 or a part of an extension line from a bottom center to the air introducing hole 24. As a result, the bottom portion of the second layer 12 is deformed from a circular shape to approximate a polygonal shape. For example, as illustrated in Fig. 4, when four air introducing holes 24 are formed, a bottom shape of the second layer 12 is rectangular. As described above, in the second layer 12, a portion of the ridge line 28 on the bottom portion side and the strip-shaped high-strength portion 26 form a columnar shape (beam shape), so that other portions are easily folded. Further, in the shrinkage in proportion to the drainage from the container, the second layer 12 may be deformed first from the easily-deformable portion 27 on a lower side close to the bottom portion or on a body portion side due to supply of air from the air introducing hole 24. In addition, at least the easily-deformable portion 27 on the bottom portion side of the second layer 12 may be delaminated from the bottom portion of the first layer 11 in an initial stage of shrinkage in proportion to the drainage.

### <Description of Delamination Container Manufacturing Apparatus>

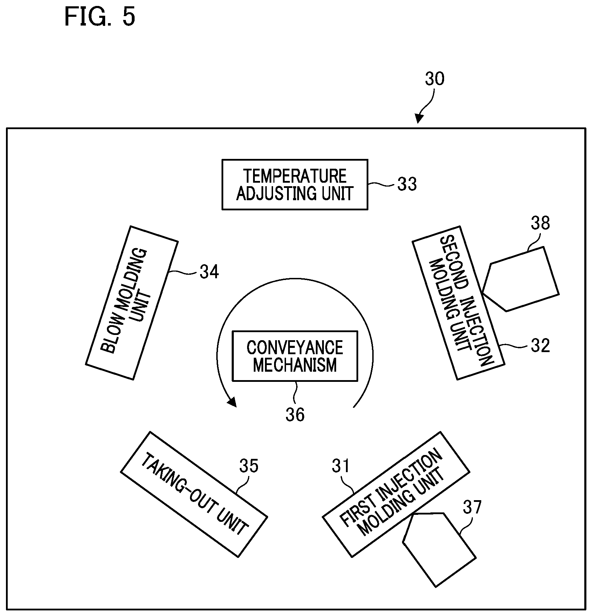

Fig. 5 is a diagram schematically illustrating a configuration of a blow molding apparatus 30 according to the embodiment. The blow molding apparatus 30 of the embodiment is an example of an apparatus that manufactures the delamination container 20 and employs a hot parison method (also referred to as a one-stage method) in which the delamination container 20 is blow-molded using residual heat (internal heat quantity) from injection molding without cooling the preform 10 to room temperature.

The blow molding apparatus 30 includes a first injection molding unit 31, a second injection molding unit 32, a temperature adjusting unit 33, a blow molding unit 34, a taking-out unit 35, and a conveyance mechanism 36. The first injection molding unit 31, the second injection molding unit 32, the temperature adjusting unit 33, the blow molding unit 34, and the taking-out unit 35 are disposed at respective positions rotated by a predetermined angle (for example, 72 degrees) about the conveyance mechanism 36. Further, a temperature adjusting unit may be further added between the first injection molding unit 31 and the second injection molding unit 32 in order to supplementarily heat or cool the first layer 11 of the preform 10. In addition, in the first injection molding unit 31 and the second injection molding unit 32, a core mold lifting/lowering mechanism (not illustrated) is provided above the conveyance mechanism 36.

### (Conveyance Mechanism 36)

The conveyance mechanism 36 includes a transfer plate (not illustrated) that moves to rotate around an axis in a direction perpendicular to the paper surface of Fig. 5. In the transfer plate, one or more neck molds 36a (not illustrated in Fig. 5) for holding the neck portion 13 of the preform 10 (or the neck portion 21 of the delamination container 20) are arranged at every predetermined angle. The conveyance mechanism 36 moves the transfer plate by a predetermined angle, thereby, conveying the preform 10 (or the delamination container 20) held by the neck mold 36a to the first injection molding unit 31, the second injection molding unit 32, the temperature adjusting unit 33, the blow molding unit 34, and the taking-out unit 35 in this order. Further, the conveyance mechanism 36 can also lift and lower the transfer plate and also performs operations related to mold closing and mold opening (releasing) in the first injection molding unit 31 and the second injection molding unit 32.

### (First Injection Molding Unit 31)

The first injection molding unit 31 includes a cavity mold 40, a core mold 41, and a hot runner mold 42 and manufactures the first layer 11 of the preform 10. The cavity mold 40 is configured to include a first cavity mold 40A on an opening side (upper side) thereof and a second cavity mold 40B on a bottom side (lower side) thereof. A first injection device 37 that supplies a first resin material to the hot runner mold 42 is connected to the first injection molding unit 31. The cavity mold 40 and the hot runner mold 42 are fixed, in an integrated state, to a machine base of the blow molding apparatus 30. The core mold 41 is fixed to a core mold lifting/lowering mechanism.

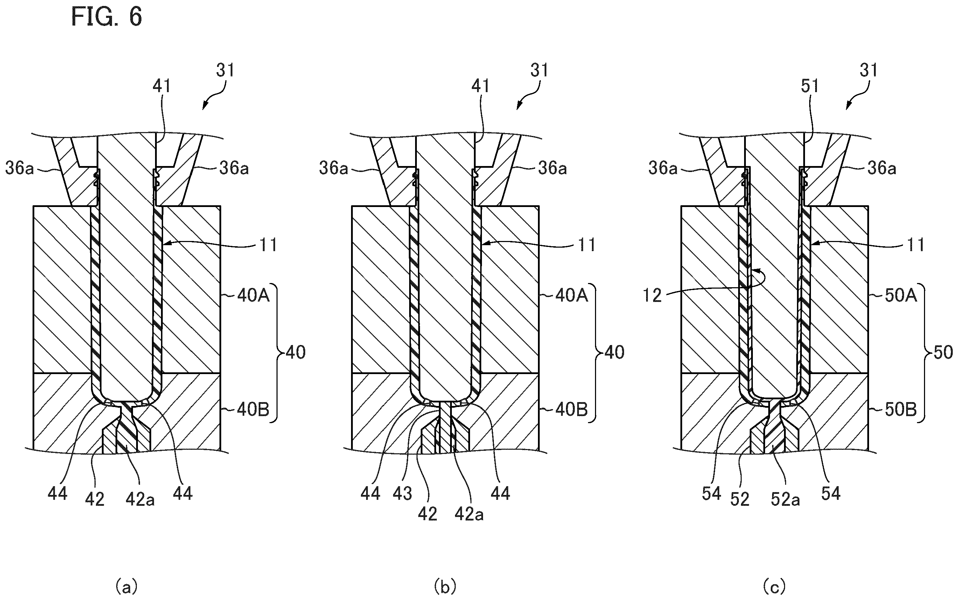

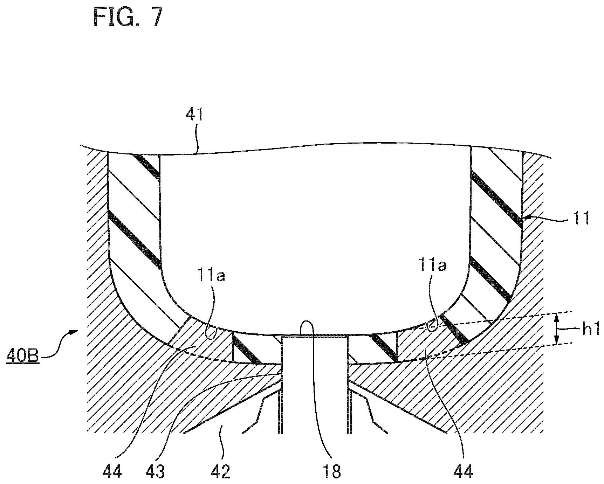

Figs. 6(a) and 6(b) illustrate the first injection molding unit 31 that molds the first layer 11 of the preform 10 of the embodiment. Fig. 7 is a view illustrating the vicinity of the bottom portion of the first layer 11 in the first injection molding unit 31.

The cavity mold 40 defines a shape of an outer periphery of the first layer 11. The first cavity mold 40A is a mold facing the opening side of the cavity mold 40 and defines a shape of an outer periphery of a body portion of the first layer 11. The second cavity mold 40B is a mold facing a bottom surface side of the cavity mold 40 and defines a shape of an outer periphery of the bottom portion of the first layer 11. In addition, the hot runner mold 42 includes a resin supply portion 42a that introduces the first resin material from the first injection device 37. The core mold 41 is a mold that defines a shape of an inner circumferential side of the first layer 11 and is inserted into an inner circumferential side of the cavity mold 40 from above. Further, the first cavity mold 40A and the second cavity mold 40B may be integrally formed.

As illustrated in Figs. 6(a) and 6(b), in the first injection molding unit 31, the cavity mold 40, the core mold 41, and the neck mold 36a of the conveyance mechanism 36 are closed to form a mold space for the first layer 11. Then, the first resin material is poured from a bottom portion of the mold space via the hot runner mold 42, and thereby the first layer 11 of the preform 10 is manufactured in the first injection molding unit 31.

A plurality of rib-shaped first protrusions 44 are radially arranged on an upper surface side of the second cavity mold 40B facing the outer periphery of the bottom portion of the first layer 11. Two or more, preferably four, first protrusions 44 are formed and disposed at intervals in a radial direction from the center of the bottom portion where the resin supply portion 42a is located, and the first protrusions 44 have rotational symmetry around the center of the bottom portion. As illustrated in Fig. 7(a), a protrusion amount h1 of the first protrusion 44 from an outer circumferential surface of the bottom portion of the first layer 11 has substantially the same dimension as the thickness of the first layer 11. Therefore, when the molds of first injection molding unit 31 are closed, a tip of the first protrusion 44 faces a surface of the core mold 41. Consequently, in the injection molding of the first injection molding unit 31, a circular recess portion 11a is formed in the first layer 11 at a position corresponding to the recess portion 17 of the preform 10 by the first protrusion 44. The recess portion 11a of the first layer 11 may penetrate the first layer 11 or may have a thin film formed between the core mold 41 and the first protrusion 44. Further, the recess portion 11a of the first layer 11 formed by the first injection molding unit 31 is also referred to as a first recess portion.

In addition, as illustrated in Fig. 6(b), the resin supply portion 42a of the hot runner mold 42 has a valve pin 43 that is movable in an axial direction to a position close to the core mold 41. The valve pin 43 is accommodated in the hot runner mold 42 until the mold space is filled with the first resin material, and the valve pin protrudes to a position close to the core mold 41 after the mold space is filled with the first resin material. The movement of the valve pin 43 during injection molding enables a thin film portion 18 of which a thickness of a resin material is thinner than that of a circumferential portion to be formed at the center of the bottom portion of the first layer 11.

In addition, even when the molds of first injection molding unit 31 are opened, the neck mold 36a of the conveyance mechanism 36 is not released, and the first layer 11 of the preform 10 is held and conveyed as it is. The number of the preforms 10 simultaneously molded by the first injection molding unit 31 (that is, the number of the delamination containers 20 that can be simultaneously molded by the blow molding apparatus 30) can be appropriately set.

### (Second Injection Molding Unit 32)

The second injection molding unit 32 includes a cavity mold 50, a core mold 51, and a hot runner mold 52, and performs injection molding to form the second layer 12 on the inner circumferential side of the first layer 11. The cavity mold 50 is configured to include a first cavity mold 50A on an opening side (upper side) thereof and a second cavity mold 50B on a bottom side (lower side) thereof. A second injection device 38 that supplies a second resin material to the hot runner mold 52 is connected to the second injection molding unit 32. Further, the first cavity mold 50A and the second cavity mold 50B may be integrally formed.

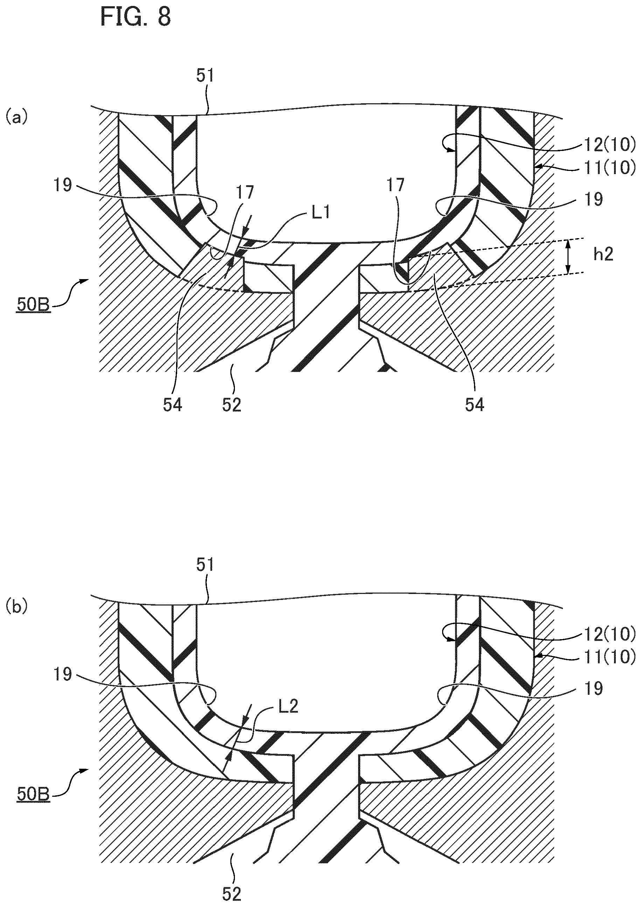

Fig. 6(c) illustrates the second injection molding unit 32 that molds the second layer 12 of the preform 10. Figs. 8(a) and 8(b) are views illustrating the vicinity of the bottom portion of the preform 10 in the second injection molding unit 32.

The cavity mold 50 is a mold that accommodates the first layer 11. The first cavity mold 50A is a mold facing the opening side of the cavity mold 50 and accommodates the body portion of the first layer 11. The second cavity mold 50B is a mold facing the bottom side of the cavity mold 50 and accommodates the bottom portion of the first layer 11. In addition, the hot runner mold 52 includes a resin supply portion 52a that introduces the second resin material from the second injection device 38. The core mold 51 is a mold that defines a shape of an inner circumferential side of the second layer 12 and is inserted into an inner circumferential side of the cavity mold 50 from above.

As illustrated in Fig. 6(c), the second injection molding unit 32 accommodates the first layer 11 of the preform 10 formed through the injection molding by the first injection molding unit 31. In a state where the molds of second injection molding unit 32 are closed, a mold space is formed between the inner circumferential side of the first layer 11 and a surface of the core mold 51. In the second injection molding unit 32, the second resin material is poured from a bottom portion of the mold space via the hot runner mold 52 to form the preform 10 in which the second layer 12 is laminated on the inner circumferential side of the first layer 11.

In addition, on an upper surface side of the second cavity mold 50B facing the outer periphery of the bottom portion of the first layer 11, a circular second protrusion 54 corresponding to the shape of the recess portion 17 of the preform 10 is provided at a predetermined position corresponding to the first protrusion 44 of the first injection molding unit 31. The second protrusion 54 is inserted into the recess portion 11a of the first layer 11 when the first layer 11 is accommodated in the second injection molding unit 32.

Here, Fig. 8(a) illustrates a longitudinal section at the position of the second protrusion 54 in the circumferential direction. Fig. 8(b) illustrates a longitudinal section at a position where the second protrusion is not formed in the circumferential direction.

As illustrated in Fig. 8(a), a protrusion amount h2 of the second protrusion 54 from the outer circumferential surface of the bottom portion the first layer 11 has a dimension larger than the thickness of the first layer 11. That is, the protrusion amount h2 of the second protrusion 54 is larger than the protrusion amount h1 of the first protrusion 44 (h2 > h1). Therefore, when the molds of second injection molding unit 32 are closed, a tip of the second protrusion 54 penetrates the recess portion 11a of the first layer 11 and protrudes to the inner circumferential side of the first layer 11. The second protrusion 54 formed on the second cavity mold 50B of the second injection molding unit 32 enables the recess portion 17 to be formed in the bottom portion 15 of the preform 10.

Further, although not particularly limited, a difference between the protrusion amount h1 of the first protrusion 44 and the protrusion amount h2 of the second protrusion 54 (the protrusion amount of the second protrusion 54 from the first layer) is preferably 1/4 or less to 1/5 or less of the thickness of the bottom portion of the preform 10.

The protrusion amount h2 of the second protrusion 54 is set to be smaller than the thickness of the preform 10. That is, in the injection molding in the second injection molding unit 32, the second resin material flows between the core mold 51 and the second protrusion 54, and thus a hole penetrating the second layer 12 is not formed by the second protrusion 54.

In the second injection molding unit 32, a space between the first layer 11 and the core mold 51 is filled with the second resin material, but at the position of the second protrusion 54 illustrated in Fig. 8(a), the second resin material is also in contact with the second protrusion 54 penetrating the recess portion 11a of the first layer 11. In addition, in the second injection molding unit 32, a gap L1 between the second protrusion 54 and the surface of the core mold 51 illustrated in Fig. 8(a) is smaller than a gap L2 between the inner circumferential surface of the first layer 11 and the surface of the core mold 51 illustrated in Fig. 8(b).

### (Temperature Adjusting Unit 33)

The temperature adjusting unit 33 includes a temperature adjusting mold unit (temperature adjusting pot and temperature adjusting core) (not illustrated). The temperature adjusting unit 33 accommodates the preform 10 conveyed from the second injection molding unit 32 in a mold unit maintained at a predetermined temperature, thereby, equalizing temperature and removing uneven temperature to adjust the temperature of the preform 10 to a temperature suitable for final blowing (for example, about 90°C to 105°C). In addition, the temperature adjusting unit 33 also has a function of cooling the preform 10 in a high temperature state after the injection molding.

### (Blow Molding Unit 34)

The blow molding unit 34 performs blow molding on the preform 10 having a temperature adjusted by the temperature adjusting unit 33 to manufacture the delamination container 20.

The blow molding unit 34 includes a blow cavity mold which is a pair of split molds corresponding to the shape of the delamination container 20, a bottom mold, a stretching rod, and an air introduction member (all not illustrated). The blow molding unit 34 performs blow molding on the preform 10 while stretching the preform. Consequently, the preform 10 is shaped into a shape of the blow cavity mold, and the delamination container 20 can be manufactured.

### (Taking-out Unit 35)

The taking-out unit 35 is configured to release the neck portion 21 of the delamination container 20 manufactured by the blow molding unit 34 from the neck mold 36a and take out the delamination container 20 to the outside of the blow molding apparatus 30.

### <Description of Method for Manufacturing Container>

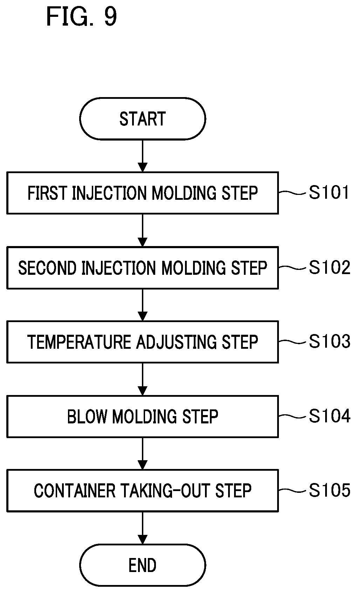

Next, a method for manufacturing the delamination container 20 by the blow molding apparatus 30 of the embodiment will be described. Fig. 9 is a flowchart illustrating steps of the method for manufacturing the delamination container 20.

### (Step S101: First Injection Molding Step)

First, as illustrated in Fig. 6(a), in the first injection molding unit 31, the first resin material is injected from the first injection device 37 into the mold space formed by the cavity mold 40, the core mold 41, and the neck mold 36a, and the first layer 11 of the preform 10 is molded. At this time, as illustrated in Fig. 7, the first protrusion 44 forms the recess portion 11a at the bottom portion of the first layer 11.

In the first injection molding unit 31, as illustrated in Fig. 6(b), after the first layer 11 of the preform 10 is molded, a step of protruding the valve pin 43 to a position close to the core mold 41 is performed. Consequently, as illustrated in Fig. 7, the thin film portion 18 having a thickness thinner than that of the circumferential portion is formed at the center of the bottom portion of the first layer 11.

Thereafter, the molds of first injection molding unit 31 are opened, and the first layer 11 is released. When the molds of first injection molding unit 31 are opened, the transfer plate of the conveyance mechanism 36 moves to rotate by a predetermined angle, and the first layer 11 of the preform 10 held by the neck mold 36a is conveyed to the second injection molding unit 32 in a state of containing residual heat from injection molding.

### (Step S102: Second Injection Molding Step)

Subsequently, the first layer 11 of the preform 10 is accommodated in the second injection molding unit 32, and injection molding of the second layer 12 is performed.

In the second injection molding unit 32, as illustrated in Fig. 6(c), a mold space is formed between the inner circumferential side of the first layer 11 and the surface of the core mold 51 facing the inner periphery of the first layer 11, and the second resin material is filled into the mold space from the hot runner mold 52. Further, although the thin film portion 18 is formed at the bottom portion of the first layer 11, the thin film portion 18 is broken by an injection pressure of the second resin material to form an opening portion 16 at the bottom portion, and the second resin material is guided from the opening portion 16 to the inner circumferential side of the first layer 11.

Here, the temperature of the second resin material with which the second injection molding unit 32 is filled is set to a temperature lower than the melting point of the first resin material. In addition, a surface temperature of the first layer 11 when the second injection molding unit 32 is filled with the second resin material is cooled to a temperature equal to or lower than the melting point of the second resin material.

In the second injection molding unit 32, the cavity mold 50 faces the outer circumferential side of the first layer 11, and the shape of the first layer 11 is held by the cavity mold 50 from the outer circumferential side. Therefore, even when the second resin material comes into contact with first layer 11, thermal deformation of first layer 11 can be suppressed.

In addition, in the second injection molding unit 32, since the second protrusion 54 penetrates and closes the recess portion 11a of the first layer 11, the recess portion 17 of the preform 10 is not closed by the second resin material. In addition, since the tip of the second protrusion 54 in the second injection molding unit 32 protrudes to the inner circumferential side of the first layer, the recess portion 17 of the preform 10 formed by the second protrusion 54 has a shape that penetrates the first layer 11 and allows the surface of the second layer 12 to be exposed in the recess portion 17.

In addition, in the second injection molding unit 32, the second resin material flows radially outward through between the core mold 51 and the second protrusion 54, so that the strip-shaped first region 19 is formed in the second layer 12.

First, in the second injection molding unit 32, as illustrated in Fig. 8(b), the space between the first layer 11 and the surface of the core mold 51 is filled with the second resin material, and the second resin material is cooled by contact with the core mold 51. On the other hand, at the position of the second protrusion 54 illustrated in Fig. 8(a), the second resin material flows between the core mold 51 and the second protrusion 54, and cooling is performed by contact with both the core mold 51 and the second protrusion 54. Therefore, at the position of the second protrusion 54, the second resin material is more rapidly cooled by the second protrusion 54 than at other positions, so that the viscosity of the second resin material increases and the density of the resin in the first region 19 increases.

In addition, in the second injection molding unit 32, the gap L1 between the second protrusion 54 and the surface of the core mold 51 illustrated in Fig. 8(a) is smaller than the gap L2 between the first layer 11 and the surface of the core mold 51 illustrated in Fig. 8(b). Therefore, a flow velocity of a resin passing between the second protrusion 54 and the core mold 51 is faster than a flow velocity of a resin passing between the first layer 11 and the core mold 51. Consequently, filling with the second resin material is performed from the position of the second protrusion 54 in the circumferential direction of the second injection molding unit 32, and the resin in the first region 19 flows along the longitudinal direction from the bottom portion 15 toward the neck portion 13. Therefore, an orientation of the resin in the first region 19 has directivity along the longitudinal direction.

On the other hand, since the resin flows into the second region of the second layer 12 later than into the first region 19, a spreading flow of the resin in the circumferential direction from the first region 19 is added to the flow of the resin in the second region. Therefore, the orientation of the resin varies in the second region as compared with the first region 19.

As described above, the resin has a higher density in the first region 19 of the second layer 12 than in the second region and has directivity such that the orientation of the resin is along the longitudinal direction of the preform 10, thus, having a characteristic of being hardly deformed in the circumferential direction.

As described above, the preform 10 in which the second layer 12 is laminated on the inner circumferential side of the first layer 11 is manufactured through the first injection molding step and the second injection molding step.

Thereafter, when the molds of second injection molding unit 32 are opened, the transfer plate of the conveyance mechanism 36 moves to rotate by a predetermined angle, and the preform 10 held by the neck mold 36a is conveyed to the temperature adjusting unit 33 in a state of having residual heat from injection molding.

### (Step S103: Temperature Adjusting Step)

Subsequently, in the temperature adjusting unit 33, the preform 10 is accommodated in a temperature adjusting mold unit, and temperature adjustment of the preform 10 to a temperature close to a temperature suitable for final blowing is performed. Thereafter, the transfer plate of the conveyance mechanism 36 moves to rotate by a predetermined angle, and the temperature adjusted preform 10 held by the neck mold 36a is conveyed to the blow molding unit 34.

### (Step S104: Blow Molding Step)

Subsequently, in the blow molding unit 34, blow molding of the delamination container 20 is performed.

First, the blow cavity mold is closed, the preform 10 is accommodated in the mold space, and the air introduction member (blow core) is lowered, so that the air introduction member abuts on the neck portion 13 of the preform 10. Then, the stretching rod is lowered to hold the bottom portion 15 of the preform 10 from an inner surface thereof, and blow air is supplied from the air introduction member, while longitudinal stretching is performed as necessary, so that the preform 10 is horizontally stretched. Consequently, the preform 10 is bulged and shaped to be in close contact with the mold space of the blow cavity mold and is blow-molded into the delamination container 20.

Further, during the blow molding, the first region 19 of the preform 10 is stretched to form the strip-shaped high-strength portion 26 in the second layer 12 of the delamination container 20.

### (Step S105: Container Taking-out Step)

When the blow molding is finished, the blow cavity mold is opened. Consequently, the delamination container 20 is movable from the blow molding unit 34.

Subsequently, the transfer plate of the conveyance mechanism 36 moves to rotate by a predetermined angle, and the delamination container 20 is conveyed to the taking-out unit 35. In the taking-out unit 35, the neck portion 21 of the delamination container 20 is opened from the neck mold 36a, and the delamination container 20 is released to the outside of the blow molding apparatus 30.

As described above, one cycle in the method for manufacturing a delamination container is ended. Thereafter, by moving the transfer plate of the conveyance mechanism 36 to rotate by the predetermined angle, the respective steps of S101 to S105 described above are repeated. Further, during an operation of the blow molding apparatus 30, five sets of the delamination containers 20 having a time difference of one step are manufactured in parallel.

In addition, due to the structure of the blow molding apparatus 30, waiting times of the first injection molding step, the second injection molding step, the temperature adjusting step, the blow molding step, and the container taking-out step are the same. Similarly, a conveyance time between the steps is the same.

Hereinafter, effects of the method for manufacturing a container in the embodiment will be described.

In the embodiment, the first layer 11 (outer layer) of the preform 10 is molded in the first injection molding step, and the second layer 12 (inner layer) is formed through the injection molding inside the first layer 11 from the opening portion 16 of the first layer 11 in the second injection molding step to manufacture the preform 10 having a two-layer structure. According to the embodiment, the outer layer can be first formed of a resin material having a high melting point, and then the inner layer can be formed of a resin material having a melting point lower than that of the outer layer. That is, the injection molding of the inner layer is continuously performed while the outer layer has the residual heat from the injection molding, so that the preform 10 having the two-layer structure suitable for the specification of the delamination container 20 can be manufactured. In the embodiment, since the preform 10 having the two-layer structure is released in a state where both the outer layer and the inner layer have residual heat from the injection molding, it is possible to obtain the preform 10 suitable for manufacturing the delamination container 20 by a hot parison blow molding method.

In addition, in the embodiment, the first protrusion 44 forms the recess portion 11a in the first layer 11 in the first injection molding step. Then, in the second injection molding step, the second protrusion 54 having a larger protrusion amount than that of the first protrusion 44 penetrates the recess portion 11a of the first layer 11 to form the recess portion 17 in the bottom portion 15 of the preform 10. Consequently, in the delamination container 20, the air introducing hole 24 that penetrates the first layer 11 and reaches the surface of the second layer 12 can be reliably formed.

In addition, in the second injection molding step, the flow velocity and the temperature of the resin having passed through the second protrusion 54 are changed using an injection mold in which the second protrusion 54 is partially formed in the circumferential direction of the bottom portion. Consequently, in the second layer 12 of the preform 10, the first region 19 having a higher strength than other parts in the circumferential direction is formed starting from the recess portion 17 formed by the second protrusion 54.

In the embodiment, the preform 10 having the two-layer structure is subjected to stretch blow molding in a state of having the residual heat from the injection molding to manufacture the delamination container 20. At this time, by stretching the first region 19 of the preform 10, the strip-shaped high-strength portion 26 is formed in the second layer 12 of the delamination container 20. In the shrinkage of the second layer 12 of the delamination container 20, the easily-deformable portion 27 is folded so as to have close contact portions thereof along the high-strength portion 26 extending in the radial direction, and the second layer 12 is guided by the high-strength portion 26 to be appropriately and regularly shrunk and deformed.

In addition, the first region 19 of the preform 10 is formed by changing the flow velocity and the temperature of the resin by the second protrusion 54, thus, having substantially the same external appearance as that of the second region. The same applies to the high-strength portion 26 in the second layer 12 of the delamination container 20. Therefore, in the embodiment, the shrinkage inducing structure part can be formed to be inconspicuous, and the aesthetic appearance and functionality of the delamination container 20 can be improved.

In addition, in the embodiment, the second protrusion 54 for forming the air introducing hole 24 is used to form the first region 19, which is the base of the shrinkage inducing structure part of the container, in the second layer 12. Consequently, it is possible to form the shrinkage inducing structure part in the second layer 12 while maintaining the inner surface side of the second layer 12 filled with the contents flat, and thus it is possible to improve liquid drainability when a remaining amount is small in the blow-molded delamination container 20.

The present invention is not limited to the above-described embodiments, and various improvements and design changes may be made without departing from the gist of the present invention.

In the above-described embodiments, the example has been described in which the circular recess portion 17 is formed in the bottom portion 15 of the preform 10 by forming the rib-shaped protrusion on the bottom portion of the cavity mold. However, the shape of the protrusion formed on the bottom portion of the cavity mold is not limited thereto and may be any shape. In addition, the number of protrusions formed on the bottom portion of the cavity mold may be, for example, one, or a plurality of protrusions other than four protrusions may be formed.

In addition, the blow molding apparatus 30 and the blow molding method of the present invention may be implemented as a six-station type of blow molding apparatus and blow molding method. That is, a temperature adjusting unit (temperature adjusting step) may be additionally provided between the first injection molding unit 31 and the second injection molding unit 32 (between the first injection molding step and the second injection molding step).

In addition, in the above-described embodiment, the case where the shrinkage inducing high-strength portion is formed in the inner layer of the delamination container having the two-layer structure has been described. However, the present invention can also be applied to the manufacture of a single-layer container (such as a BIB container) that can shrink in proportion to the discharge of the contents. The blow molding apparatus in this case has one injection molding unit (so-called four-station type) .

A preform 10A corresponding to the single-layer container is manufactured as follows.

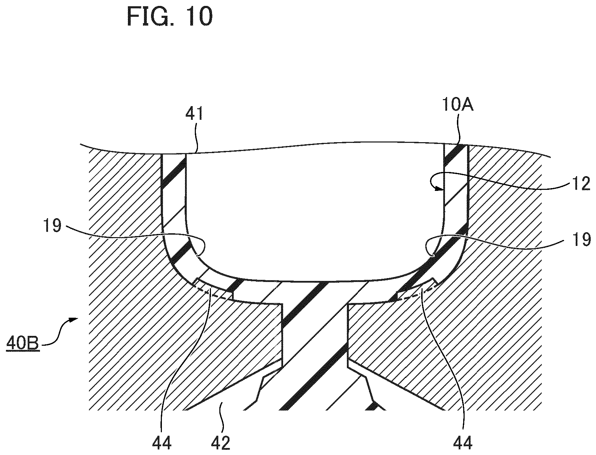

For example, as illustrated in Fig. 10, at the bottom portion of the second cavity mold 40B of the injection molding unit, a protrusion 44 having a height so as not to come into contact with the core mold 41 is partially formed in the circumferential direction. In the case of Fig. 10, the resin comes into contact with the core mold 41 and the second cavity mold 40B in the entire region in the circumferential direction, but a flow velocity of the resin increases in a portion at which the resin passes through the protrusion 44. Consequently, directivity can be imparted to the orientation of the resin as described above at the position corresponding to the protrusion 44 of the preform 10A.

As described above, also in the single-layer preform 10A, the strip-shaped first region 19 extending from a position corresponding to the protrusion 44 can be formed in the same manner as in the above-described embodiment. The preform 10A is produced through blow, and thereby the high-strength portion 26 can be formed in the single-layer container, similarly to the second layer 12 of the delamination container 20 described above.

Further, the high-strength portion 26 of the delamination container 20 of the above-described embodiment may be partially formed in the bottom portion 23 of the container (or from the bottom portion 23 of the container to a lower region of the body portion 22). For example, the high-strength portion 26 may not be formed in an upper region of the body portion 22 of the container (such as the shoulder 22a of the container). In the case of the above-described aspect, the easily-deformable portion 27 is divided by the high-strength portion 26 in the circumferential direction on the bottom portion side of the container, whereas the second layer 12 becomes the easily-deformable portion 27 over the entire periphery in the upper region of the body portion 22 of the container without the high-strength portion 26. Further, in the case of the above-described aspect, the first region 19 formed at the second layer 12 of the preform 10 is also partially formed from the bottom portion side toward the body portion and is not formed on the neck portion side.

### Reference Signs List

10, 10A preform
11 first layer
11a recess portion
12 second layer
16 opening portion
17 recess portion
19 first region
20 delamination container
24 air introducing hole
26 high-strength portion
27 easily-deformable portion
30 blow molding apparatus
31 first injection molding unit
32 second injection molding unit
34 blow molding unit
37 first injection device
38 second injection device
40B, 50B cavity mold
44 first protrusion
54 second protrusion

## Claims

1. A method for manufacturing a resin delamination container (20), comprising:
a first injection molding step of performing injection molding to form an outer layer (11) of a bottomed cylindrical preform (10) with a first resin material by applying a first injection mold;
a second injection molding step of injecting a second resin material different from the first resin material onto an inner circumferential side of the outer layer (11) by applying a second injection mold to form a multi-layer preform (10) in which an inner layer (12) is laminated on the inside of the outer layer (11); and
a blow molding step of performing blow molding on the multi-layer preform (10) in a state of having residual heat from the injection molding to manufacture the delamination container (20) in which the inner layer (12) shrinks in proportion to the discharge of contents,
**characterized in that**:
in the first injection molding step, a first recess portion (11a) is formed in at least a part of the outer layer (11) by a first protrusion (44) provided in the first injection mold;
in the second injection molding step, a second recess portion (17) which penetrates the outer layer (11) and exposes a surface of the inner layer (12) is formed in the preform (10) by inserting a second protrusion (54) provided in the second injection mold into the first recess portion (11a); and
a region (19) having a higher strength than other portions in a circumferential direction based on a corresponding position of the second recess portion (17) is formed in the inner layer (12), by contacting the second protrusion (54) with the second resin material, wherein at least one of a flow velocity and a temperature of the second resin material passing through the second protrusion (54) is changed.

2. The method for manufacturing a resin delamination container (20) according to claim 1,
wherein the region (19) extends from the corresponding position of the second recess portion (17) toward a radially outer side of the inner layer (12).

3. The method for manufacturing a resin delamination container (20) according to claim 1 or 2,
wherein in the blow molding step, an air introducing hole (24) is formed in the outer layer (11) at a position corresponding to the second recess portion (17).

4. A resin delamination container (20) manufacturing apparatus comprising:
a first injection molding unit (31) that performs injection molding to form an outer layer (11) of a bottomed cylindrical preform (10) with a first resin material by applying a first injection mold;
a second injection molding unit (32) that injects a second resin material different from the first resin material onto an inner circumferential side of the outer layer (11) by applying a second injection mold to form a multi-layer preform (10) in which an inner layer (12) is laminated on the inside of the outer layer (11); and
a blow molding unit (34) that performs blow molding on the multi-layer preform (10) in a state of having residual heat from the injection molding to manufacture the delamination container (20) in which the inner layer (12) shrinks in proportion to the discharge of contents,
**characterized in that**:
the first injection molding unit (31) forms a first recess portion (11a) in at least a part of the outer layer (11) by a first protrusion (44) provided in the first injection mold;
the second injection molding unit (32) forms a second recess portion (17) which penetrates the outer layer (11) and exposes a surface of the inner layer (12) in the preform (10) by inserting a second protrusion (54) provided in the second injection mold into the first recess portion (11a); and
a region (19) having a higher strength than other portions in a circumferential direction based on a corresponding position of the second recess portion (17) is formed in the inner layer (12), by contacting the second protrusion (54) with the second resin material, wherein at least one of a flow velocity and a temperature of the second resin material passing through the second protrusion (54) is changed.

## Patentansprüche

1. Verfahren zur Herstellung eines Harzdelaminationsbehälters (20), das Folgendes umfasst:
einen ersten Spritzgießschritt des Ausführens von Spritzgießen zur Ausbildung einer Außenschicht (11) eines zylindrischen Vorformlings mit Boden (10) aus einem ersten Harzmaterial durch Anwenden einer ersten Spritzgießform;
einen zweiten Spritzgießschritt des Einspritzens eines zweiten Harzmaterials, das sich vom ersten Harzmaterial unterscheidet, auf eine innere Umfangsseite der Außenschicht (11) durch Anwenden einer zweiten Spritzgießform, um einen mehrschichtigen Vorformling (10) auszubilden, bei dem eine Innenschicht (12) auf die Innenseite der Außenschicht (11) laminiert ist; und
einen Blasformschritt des Ausführens von Blasformen an dem mehrschichtigen Vorformling (10) in einem Zustand mit Restwärme vom Spritzgießen, um den Delaminationsbehälter (20) herzustellen, bei dem die Innenschicht (12) proportional zur Abgabe von Inhalt schrumpft,
**dadurch gekennzeichnet, dass**:
beim ersten Spritzgießschritt ein erster Ausnehmungsabschnitt (11a) in zumindest einem Teil der Außenschicht (11) durch einen ersten Vorsprung (44) ausgebildet wird, der in der ersten Spritzgießform bereitgestellt ist;
beim zweiten Spritzgießschritt ein zweiter Ausnehmungsabschnitt (17), der die Außenschicht (11) penetriert und eine Oberfläche der Innenschicht (12) freilegt, im Vorformling (10) durch Einführen eines zweiten Vorsprungs (54), der in der zweiten Spritzgießform bereitgestellt ist, im ersten Ausnehmungsabschnitt (11a) ausgebildet wird; und
ein Bereich (19) mit höherer Festigkeit als andere Abschnitte in Umfangsrichtung basierend auf einer entsprechenden Position des zweiten Ausnehmungsabschnitts (17) in der Innenschicht (12) ausgebildet wird, indem der zweite Vorsprung (54) mit dem zweiten Harzmaterial in Kontakt gebracht wird, wobei zumindest eines aus der Strömungsgeschwindigkeit und der Temperatur des zweiten Harzmaterials, das den zweiten Vorsprung (54) passiert, geändert wird.

2. Verfahren zur Herstellung eines Harzdelaminationsbehälters (20) nach Anspruch 1,
wobei sich der Bereich (19) von der entsprechenden Position des zweiten Ausnehmungsabschnitts (17) zu einer radial äußeren Seite der Innenschicht (12) erstreckt.

3. Verfahren zur Herstellung eines Harzdelaminationsbehälters (20) nach Anspruch 1 oder 2,
wobei beim Blasformschritt ein Lufteinbringungsloch (24) in der Außenschicht (11) an einer Position ausgebildet wird, die dem zweiten Ausnehmungsabschnitt (17) entspricht.

4. Vorrichtung zur Herstellung eines Harzdelaminationsbehälters (20), das Folgendes umfasst:
eine erste Spritzgießeinheit (31), die Spritzgießen ausführt, um eine Außenschicht (11) eines zylindrischen Vorformlings mit Boden (10) aus einem ersten Harzmaterial durch Anwenden einer ersten Spritzgießform auszubilden;
eine zweite Spritzgießeinheit (32), die ein zweites Harzmaterial, das sich vom ersten Material unterscheidet, auf eine innere Umfangsseite der Außenschicht (11) durch Anwenden einer zweiten Spritzgießform einspritzt, um einen mehrschichtigen Vorformling (10) auszubilden, bei dem eine Innenschicht (12) auf die Innenseite der Außenschicht (11) laminiert ist; und
eine Blasformeinheit (34), die Blasformen an dem mehrschichtigen Vorformling (10) in einem Zustand mit Restwärme vom Spritzgießen ausführt, um den Delaminationsbehälter (20) herzustellen, bei dem die Innenschicht (12) proportional zur Abgabe von Inhalt schrumpft,
**dadurch gekennzeichnet, dass**:
die erste Spritzgießeinheit (31) einen ersten Ausnehmungsabschnitt (11a) in zumindest einem Teil der Außenschicht (11) durch einen ersten Vorsprung (44) ausbildet, der in der ersten Spritzgießform bereitgestellt ist;
die zweite Spritzgießeinheit (32) einen zweiten Ausnehmungsabschnitt (17), der die Außenschicht (11) penetriert und eine Oberfläche der Innenschicht (12) freilegt, im Vorformling (10) durch Einführen eines zweiten Vorsprungs (54), der in der zweiten Spritzgießform bereitgestellt ist, im ersten Ausnehmungsabschnitt (11a) ausbildet; und
ein Bereich (19) mit höherer Festigkeit als andere Abschnitte in Umfangsrichtung basierend auf einer entsprechenden Position des zweiten Ausnehmungsabschnitts (17) in der Innenschicht (12) ausgebildet wird, indem der zweite Vorsprung (54) mit dem zweiten Harzmaterial in Kontakt gebracht wird, wobei zumindest eines aus der Strömungsgeschwindigkeit und der Temperatur des zweiten Harzmaterials, das den zweiten Vorsprung (54) passiert, geändert wird.

## Revendications

1. Procédé de fabrication d'un récipient de délaminage de résine (20), comprenant :
une première étape de moulage par injection consistant à effectuer un moulage par injection pour former une couche extérieure (11) d'une préforme cylindrique munie d'un fond (10) avec un premier matériau de résine en appliquant un premier moule d'injection ;
une seconde étape de moulage par injection consistant à injecter un second matériau de résine différent du premier matériau de résine sur un côté circonférentiel intérieur de la couche extérieure (11) en appliquant un second moule d'injection pour former une préforme multicouche (10) dans laquelle une couche intérieure (12) est stratifiée sur l'intérieur de la couche extérieure (11) ; et
une étape de moulage par soufflage consistant à effectuer un moulage par soufflage sur la préforme multicouche (10) dans un état présentant de la chaleur résiduelle provenant du moulage par injection pour fabriquer le récipient de délaminage (20) dans lequel la couche intérieure (12) se rétracte proportionnellement à la décharge du contenu,
**caractérisé en ce que** :
dans la première étape de moulage par injection, une première partie en retrait (11a) est formée dans au moins une partie de la couche extérieure (11) par l'intermédiaire d'une première saillie (44) prévue dans le premier moule d'injection ;
dans la seconde étape de moulage par injection, une seconde partie en retrait (17) qui pénètre dans la couche extérieure (11) et expose une surface de la couche intérieure (12) est formée dans la préforme (10) en insérant une seconde saillie (54), prévue dans le second moule d'injection, dans la première partie en retrait (11a) ; et
une région (19) présentant une résistance supérieure à celle d'autres parties dans une direction circonférentielle sur la base d'une position correspondante de la seconde partie en retrait (17) est formée dans la couche intérieure (12), en mettant en contact la seconde saillie (54) avec le second matériau de résine, dans lequel au moins une parmi une vitesse d'écoulement et une température du second matériau de résine passant à travers la seconde saillie (54) est modifiée.

2. Procédé de fabrication d'un récipient de délaminage de résine (20) selon la revendication 1,
dans lequel la région (19) s'étend à partir de la position correspondante de la seconde partie en retrait (17) vers un côté radialement extérieur de la couche intérieure (12).

3. Procédé de fabrication d'un récipient de délaminage de résine (20) selon la revendication 1 ou 2,
dans lequel dans l'étape de moulage par soufflage, un trou d'introduction d'air (24) est formé dans la couche extérieure (11) dans une position correspondant à la seconde partie en retrait (17).

4. Appareil de fabrication d'un récipient de délaminage de résine (20), comprenant :
une première unité de moulage par injection (31) qui effectue un moulage par injection pour former une couche extérieure (11) d'une préforme cylindrique munie d'un fond (10) avec un premier matériau de résine en appliquant un premier moule d'injection ;
une seconde unité de moulage par injection (32) qui injecte un second matériau de résine différent du premier matériau de résine sur un côté circonférentiel intérieur de la couche extérieure (11) en appliquant un second moule d'injection pour former une préforme multicouche (10) dans laquelle une couche intérieure (12) est stratifiée sur l'intérieur de la couche extérieure (11) ; et
une unité de moulage par soufflage (34) qui effectue un moulage par soufflage sur la préforme multicouche (10) dans un état présentant de la chaleur résiduelle provenant du moulage par injection pour fabriquer le récipient de délaminage (20) dans lequel la couche intérieure (12) se rétracte proportionnellement à la décharge du contenu,
**caractérisé en ce que** :
la première unité de moulage par injection (31) forme une première partie en retrait (11a) dans au moins une partie de la couche extérieure (11) par l'intermédiaire d'une première saillie (44) prévue dans le premier moule d'injection ;
la seconde unité de moulage par injection (32) forme une seconde partie en retrait (17) qui pénètre dans la couche extérieure (11) et expose une surface de la couche intérieure (12) dans la préforme (10) en insérant une seconde saillie (54), prévue dans le second moule d'injection, dans la première partie en retrait (11a) ; et
une région (19) présentant une résistance supérieure à celle d'autres parties dans une direction circonférentielle sur la base d'une position correspondante de la seconde partie en retrait (17) est formée dans la couche intérieure (12), en mettant en contact la seconde saillie (54) avec le second matériau de résine, dans lequel au moins une parmi une vitesse d'écoulement et une température du second matériau de résine passant à travers la seconde saillie (54) est modifiée.
